# EUROPÄISCHE PATENTSCHRIFT

(11) **EP 2 159 444 B1**
(45) Veröffentlichungstag und Bekanntmachung des Hinweises auf die Patenterteilung: **28.05.2014**
(21) Anmeldenummer: 09165010.1
(22) Anmeldetag: 09.07.2009
(51) Int. Cl.: F16F 9/46

(54) **Verstellbares Dämpfventil**
Adjustable damping valve
Soupape à amortissement variable

(30) Priorität: 01.09.2008 DE 102008041735
(43) Veröffentlichungstag der Anmeldung: 03.03.2010
(73) Patentinhaber: ZF Friedrichshafen AG, 88038 Friedrichshafen (DE)
(72) Erfinder: Heyn, Steffen, 97464 Niederwerrn (DE); Callies, Lothar, 97490 Poppenhausen (DE)

(56) Entgegenhaltungen:
- EP-A- 0 492 107
- DE-A1- 19 822 448

## Beschreibung

Die Erfindung betrifft ein verstellbares Dämpfventil gemäß dem Oberbegriff von Patentanspruch 1.

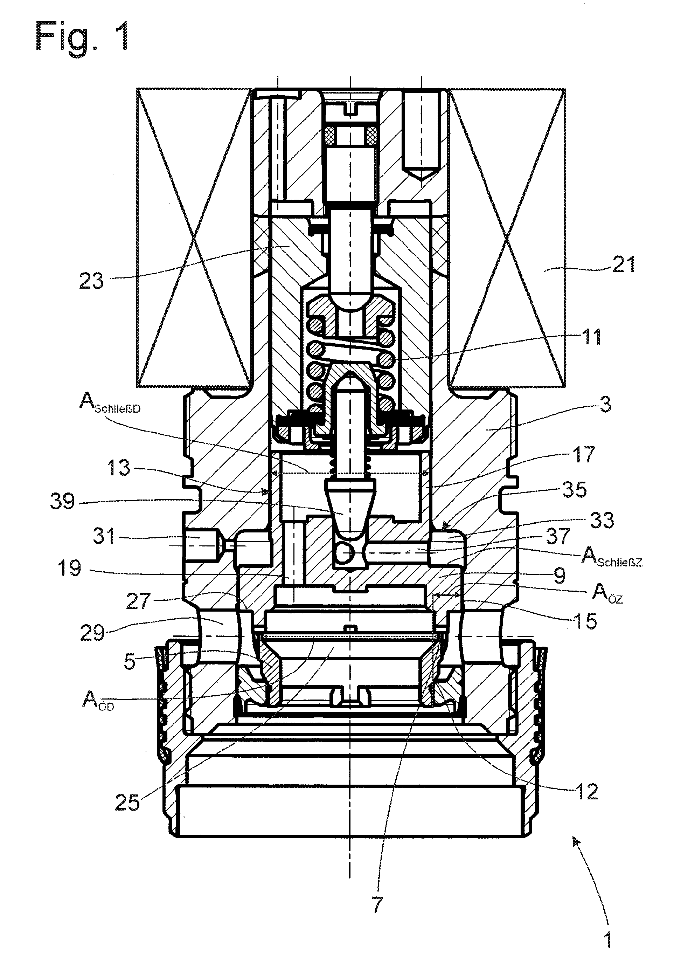

Die Figur 1 zeigt ein verstellbares Dämpfventil 1 für einen Schwingungsdämpfer in einer an einer Kolbenstange befestigbaren Variante als Stand der Technik. Das Dämpfventil 1 umfasst ein Gehäuse 3 mit einem in Grenzen axial beweglichen Ventilsitzring 5. Auf einer Ventilsitzfläche 7 des Ventilsitzrings wird ein axial beweglicher Ventilkörper 9 mittels einer Ventilfeder 11 in Schließrichtung vorgespannt. Dabei stützt sich der Ventilsitzring 5 mit seiner konischen Ventilfläche auf einer gehäuseseitigen Ventilsitzfläche 12 ab. Der Ventilkörper 9 kann in einer Stufenöffnung 13 des Gehäuses 3 axial gleiten und weist selbst eine äußere Kontur mit einem Absatz 15 zu einer Führungshülse 17 auf. Mindestens eine exzentrische Verbindungsöffnung 19 verbindet eine in Richtung der Ventilsitzfläche 7 weisende Unterseite mit einer Rückseite des Ventilkörpers 9. Dadurch stehen bei einer Anströmung des Ventilkörpers durch den Ventilsitzring 5 zwei druckbeaufschlagte Flächen am Ventilkörper 9 zur Verfügung. Eine auf den Ventilkörper 9 in Abhubrichtung wirksame druckbeaufschlagte Fläche (A_{ÖD}) wird von dem Kontaktflächeninnendurchmesser des Ventilkörpers 9 auf der Ventilsitzfläche 7 bestimmt. Der Ventilring 5 verbleibt in der dargestellten Position, da die in Abhubrichtung wirksame druckbeaufschlagte Fläche (A_{ÖD}) größer ist als der Durchmesser der Ventilsitzfläche 12. In Schließrichtung des Ventilkörpers 9 wirkt eine Druckkraft über die projizierte Fläche (A_{SchließD}) mit dem Durchmesser der Führungshülse 17 und dem Druck pö der Unterseite. Die Rückseite des Ventilkörpers wird mit Dämpfmedium beaufschlagt, um einen Druckkraftausgleich zu erreichen und dadurch den Ventilkörper mit einem geringen Energieeinsatz bewegen zu können. Die in Abhubrichtung wirksame druckbeaufschlagte Fläche (A_{ÖD}) ist geringfügig größer als die in Schließrichtung wirksame druckbeaufschlagte Fläche (A_{SchließD}), wobei in der Differenz Fertigungsabweichungen einkalkuliert sind, damit der Ventilkörper bei voll wirksamer Federkraft definiert mit geringer abheben kann.

Über eine Spule 21 in Verbindung mit einer Ankerhülse 23 kann eine Magnetkraft eingestellt werden, die der Federkraft der Ventilfeder 11 entgegengerichtet wirkt. Bei einer Anströmung des Ventilkörpers 9 über eine Durchgangsöffnung 25 des Ventilsitzrings 5 wird die größte Dämpfkraft erreicht, wenn die Magnetkraft gleich Null ist und die volle Federkraft der Ventilfeder 11 in Schließrichtung des Ventilkörpers 9 zur Verfügung steht. Dann ist für die Abhubbewegung des Ventilkörpers 9 ein besonders großer Öffnungsdruck pö an der Unterseite des Ventilkörpers 9 notwendig.

Bei maximaler Bestromung der Spule 21 kompensiert die Magnetkraft die Federkraft der Ventilfeder 11 zumindest teilweise, so dass schon bei einem deutlich kleineren Druck pö an der Fläche A_{ÖD} eine Abhubbewegung des Ventilkörpers 9 einsetzt.

Der Ventilkörper 9 verfügt für eine zweite Anströmungsrichtung über eine zweite in Öffnungsrichtung druckbeaufschlagte ringförmige Fläche A_{ÖZ}. die vom Außendurchmesser im Bereich einer Stufe 27 des Ventilkörpers 9 und dem Außendurchmesser der Kontaktfläche des Ventilrings 5 auf der gehäuseseitigen Ventilsitzfläche 12 bestimmt wird. Bei einer Anströmung des Ventilkörpers 9 und des Ventilsitzrings 5 über mindestens eine radiale Öffnung 29 im Gehäuse 3 wirkt auf die in Öffnungsrichtung wirksame ringförmige druckbeaufschlagte Fläche (Aöz) eine Abhubkraft gegen die Federkraft der Ventilfeder 11 und einer ringförmigen druckbeaufschlagten Fläche A_{SchließZ} am Absatz 15 des Ventilkörpers 9, die über einen parallelen Kanal 31 mit Druckmedium versorgt wird und in Schließrichtung wirkt. Durch den Kanal 31 kann Dämpfmedium über einen Ringraum 33 zwischen dem Absatz 15 und der Stufe 35 im Gehäuse 3 in Radialkanäle 37 des Ventilkörpers 9 einströmen und auf einen von der Ventilfeder 11 vorgespannten Ventilstößel 39 einwirken. Der Druck auf den Ventilstößel 39 wirkt als Öffnungskraft auf den Ventilstößel 39 und als zusätzliche Schließkraft für den Ventilkörper 9, so dass sich der Ventilstößel ggf. leicht vom Ventilkörper abhebt. Bei einer Bestromung der Spule 21 hebt der Ventilstößel 39 unter Bildung eines Ringspalts geringfügig vom Ventilkörper 9 ab. Der Querschnitt der mindestens einen Verbindungsöffnung 19 ist jedoch deutlich größer als der vorliegende Ringspalt, so dass sich an der Rückseite des Ventilkörpers kein Druck aufbauen kann, der eine Schließkraft auf den Ventilkörper 9 ausübt.

In der Durchlassposition des Dämpfventils kann das Dämpfmedium über die radialen Kanäle 29 durch den Spalt zwischen dem Ventilsitzring 5 und der gehäuseseitigen Ventilsitzfläche 12 überströmen. Wie aus der Beschreibung ersichtlich ist, sind die druckbeaufschlagten Flächen A_{Ö} und A_{Schließ} unabhängig voneinander, d. h. wenn man z. B. die ringförmige druckbeaufschlagte Fläche (A_{SchließZ}) am Absatz 15 vergrößern würde, hätte diese Maßnahme keinen Einfluss auf die Größe der in Abhubrichtung wirksamen druckbeaufschlagten Fläche (A_{ÖD})

Das Verhältnis von maximaler Dämpfkraft/minimaler Dämpfkraft wird als Spreizung der Dämpfkraftkennlinien des verstellbaren Dämpfventils bezeichnet. In der Praxis hat sich herausgestellt, dass die Kennlinienspreizung größer sein sollte, als bisher. Eine ganz einfache Möglichkeit könnte darin bestehen, dass man eine deutlich höher vorgespannte Ventilfeder verwendet. Eine derartige Ventilfederauslegung hätte jedoch zur Folge, dass auch die notwendige Öffnungskraft bei einer von radial außen erfolgenden Anströmung des Ventilkörpers ansteigen würde. Dieses Betriebsverhalten ist jedoch nicht erwünscht. In diesem Zusammenhang wird auf die DE 198 22 448 A1 verwiesen.

Die EP 0 492 107 A1 betrifft ein verstellbares Dämpfventil, in dem ein Ventilkörper in einer Stufenöffnung eines Gehäuses axial beweglich geführt ist. Der Ventilkörper weist für eine Anströmrichtung eine erste und eine zweite druckbeaufschlagte Fläche auf, die in Schließrichtung des Ventilkörpers wirksam ist. Die beiden druckbeaufschlagten Flächen für die eine Anströmrichtung sind nicht für eine Anströmung des Ventilkörpers für eine zweite Anströmrichtung vorgesehen.

Die Aufgabe der vorliegenden Erfindung steht darin, die Kennlinienspreizung des verstellbaren Dämpfventils für nur eine Anströmrichtung des Ventilkörpers zu vergrößern.

Erfindungsgemäß wird die Aufgabe durch die Merkmale des Patentanspruchs 1 gelöst.

Die im kennzeichnenden Teil des Anspruchs 1 definierte zusätzliche in Schließrichtung wirksame druckbeaufschlagte Fläche (A_{SchließD2}) wirkt sich bei einer anderen Anströmrichtung des Ventilkörpers nicht als zusätzliche Schließfläche aus. Über die zusätzliche Schließfläche wird eine Schließkraft erzeugt, die vom Öffnungsdruck überwunden werden muss. Ein größerer Öffnungsdruck steht für eine größere erzielbare Dämpfkraft. Bei unveränderter Ventilfederkraft und Aktuatorkraft wird eine deutlich vergrößerte Spreizung zwischen der weichsten und der härtesten Dämpfkraftkennlinie des Dämpfventils erreicht.

In weiterer vorteilhafter Ausgestaltung ist die zusätzliche in Schließrichtung wirksame druckbeaufschlagte Fläche (A_{SchließD2}) über mindestens eine Kanalverbindung mit der Durchlassöffnung verbunden. Die Kanalverbindung ist im Ventilkörper ausgeführt. Man könnte die Kanalverbindung auch im Gehäuse vorsehen, doch wäre der Fertigungsaufwand ungleich größer. Innerhalb der Kanalverbindung ist eine Drosselstelle ausgeführt, die dazu dient, das Druckniveau, das an der in Schließrichtung wirksamen druckbeaufschlagten Fläche ansteht, individuell anzupassen.

Um einen insgesamt einfach gestalteten Ventilkörper zu erreichen, wird die zusätzliche in Schließrichtung wirksame druckbeaufschlagte Fläche (A_{SchließD2}) von dem radial nach außen weisenden Absatz des Ventilkörpers gebildet. Der Absatz des Ventilkörpers und die Stufenöffnung bilden einen Ringraum, dessen Abfluss mit einer weiteren Drosselstelle bestückt ist. Über die weitere Drosselstelle kann das Druckniveau an der druckbeaufschlagten Fläche festgelegt werden.

Um unter allen Umständen eine völlig unabhängige Druckbeaufschlagung des Ventilkörpers für verschiedene Anströmrichtungen zu gewährleisten, weist die Kanalverbindung ein in Strömungsrichtung der Öffnung schließendes Rückschlagventil auf.

Eine sehr einfache bauliche Ausführung wird dadurch erreicht, dass der Ventilkörper zwei geschichtete Bauteile umfasst, zwischen denen eine Rückschlagventilscheibe axial beweglich angeordnet ist.

Bei einer Alternativvariante weist der Ventilkörper eine erste in Abhubrichtung wirksame druckbeaufschlagte Fläche (A_{ÖD}) auf, die kleiner ist als die in Schließrichtung wirksame druckbeaufschlagte Fläche (A_{Schliezß}) und mindestens eine zusätzlich in Abhubrichtung wirksame druckbeaufschlagte Fläche (A_{ÖD2}) mit einem im Vergleich zur ersten in Abhubrichtung wirksamen druckbeaufschlagten Fläche (A_{ÖD}) vermindertem Druckniveau beaufschlagt wird.

Wenn man die gegensinnig wirksamen druckbeaufschlagten Flächen auf einem nahezu identischen Durchmesser ausführt, dann genügen schon kleinste Fertigungsabweichungen, um das Betriebsverhalten des Dämpfventils zu beeinflussen. Mit der Anwendung von zwei druckbeaufschlagten Flächen mit unterschiedlichem Druckniveau wird diese Fertigungstoleranzempfindlichkeit deutlich herabgesetzt, so dass die Abhubkräfte am Ventilkörper sehr präzise über die Dimensionierung der Ventilbauteile eingestellt werden können.

In weiterer vorteilhafter Ausgestaltung ist die zusätzlich in Abhubrichtung wirksame druckbeaufschlagte Fläche (A_{ÖD2}) über eine Zuflussdrossel mit der die erste in Abhubrichtung wirksamen druckbeaufschlagten Fläche (A_{ÖD}) mit Dämpfmedium versorgenden Durchgangsöffnung verbunden.

Gemäß einem vorteilhaften Unteranspruch ist die mindestens eine zusätzlich in Abhubrichtung wirksame druckbeaufschlagte Fläche (A_{ÖD2}) zwischen einer inneren und einer äußeren Ventilsitzfläche ausgeführt ist. Es wird im Gehäuse kein zusätzlicher Bauraum für die zusätzliche druckbeaufschlagte Fläche benötigt.

Die zusätzlich in Abhubrichtung wirksame druckbeaufschlagte Fläche (A_{ÖD2}) wird von mindestens einer Ringnut gebildet und kann direkt in der Ventilsitzfläche oder im Ventilkörper ausgeführt sein.

Eine Abflussdrossel ist an die zusätzlich in Abhubrichtung wirksame druckbeaufschlagte Fläche (A_{ÖD2}) angeschlossen und bietet eine weitere Einstellmöglichkeit zur Bestimmung des Druckniveaus an der zusätzlichen druckbeaufschlagten Fläche.

Im Hinblick auf ein gleichmäßiges Druckniveau an der zusätzlich in Abhubrichtung wirksamen druckbeaufschlagten Fläche (A_{ÖD2}) sind die Zuflussdrossel und die Abflussdrossel in Umfangsrichtung versetzt ausgeführt.

Anhand der folgenden Figurenbeschreibung soll die Erfindung näher erläutert werden.

Es zeigt:
- Fig. 1: Stand der Technik
- Fig. 2 u. 3: Ausführungsbeispiel mit zusätzlicher Schließfläche
- Fig. 4: Ausführungsbeispiel mit mindestens zwei druckbeaufschlagten Flächen in Abhubrichtung
- Fig. 5: Detaildarstellung zur Fig. 4

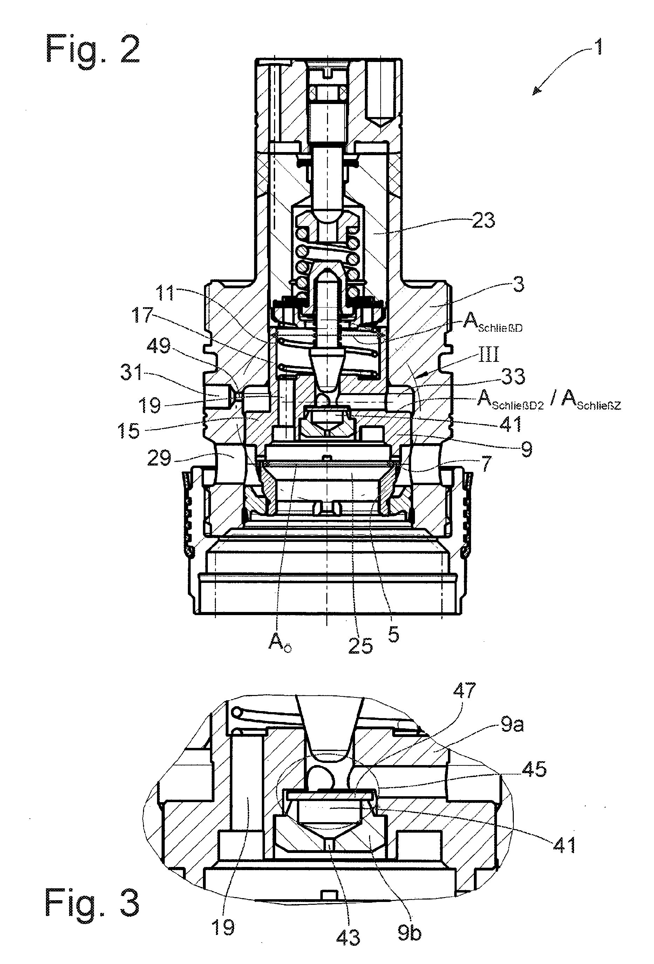

Die Fig. 2 in Verbindung mit der Fig. 3 zeigt eine erste Variante eines erfindungsgemäßen Dämpfventils 1, die auf der Konstruktion nach Fig. 1 aufbaut. Im beschriebenen Stand der Technik steht als in Abhubrichtung wirksame druckbeaufschlagte Fläche (A_{ÖD}) in Öffnungsrichtung bei einer Anströmung über die Durchgangsöffnung 25 nur die Unterseite des Ventilkörpers 9 zur Verfügung. In Schließrichtung wirkt bei der besagten Anströmungsrichtung nur die druckbedaufschlagte Fläche (A_{SchließD}) an der Rückseite des Ventilkörpers im Bereich der Führungshülse 17 auf den Ventilkörper 9. In der Fig. 2 wird eine zusätzliche Fläche des Ventilkörpers 9 in Schließrichtung mit Dämpfmedium beaufschlagt. Die zusätzliche druckbeaufschlagte. Fläche (A_{SchließD2}) wird von dem radial nach außen weisenden Absatz 15 des Ventilkörpers 9 gebildet, also von derselben druckbeaufschlagten Fläche, die bei einer Anströmung über die radialen Kanäle 31 im Gehäuse 3 wirksam ist. Die für diese Anströmrichtung zusätzliche druckbeaufschlagte Fläche A_{SchließD2} ist über eine Kanalverbindung 41 im Ventilkörper 9 mit der Durchgangsöffnung 25 verbunden. Wie insbesondere in der Fig. 3 ersichtlich ist, ist innerhalb der Kanalverbindung 41 eine Drosselstelle 43 ausgeführt. Die Kanalverbindung 41 weist ein in Strömungsrichtung zur Durchgangsöffnung 25 schließendes Rückschlagventil 45 auf. Das Rückschlagventil 45 wird von einer axial beweglichen Rückschlagventilscheibe 47 gebildet, die zwischen zwei geschichteten Bauteilen 9a; 9b des Ventilkörpers 9 axial beweglich angeordnet ist und einen Querschnitt der Kanalverbindung 41 steuert.

Der Absatz 15 des Ventilkörpers 9 und die Stufenöffnung 13 des Gehäuses 3 bilden den Ringraum 33, dessen Zu- und Abfluss mit einer weiteren Drosselstelle 49 bestückt ist.

Bei einer Anströmung des Ventilkörpers 9 mit Dämpfmedium über die Durchgangsöffnung 25 wird die in Abhubrichtung wirksame druckbeaufschlagte Fläche (A_{ÖD}) mit dem Öffnungsdruck pö beaufschlagt. Über die exzentrische Verbindungsöffnung 19 kann das Dämpfmedium die Rückseite des Ventilkörpers 9 erreichen und übt über die in Schließrichtung wirksame druckbeaufschlagte Fläche (A_{SchließD}) eine erste in Schließrichtung des Ventilkörpers 9 wirksame Kraft. Parallel dazu tritt Dämpfmedium über die Drossel in die Kanalverbindung 41 ein und durchströmt das geöffnete Rückschlagventil 45 in Richtung des Ringraums 33. Dort kann das Dämpfmedium den Absatz 15 mit der zusätzlich in Schließrichtung wirksamen druckbeaufschlagten Fläche (A_{SchließD2}) des Ventilkörpers 9 mit einer Druckkraft in Schließrichtung belasten. Das Druckniveau auf der zusätzlich in Schließrichtung wirksamen druckbeaufschlagten Fläche (A_{SchließD2}) wird vom Drosselwiderstand der Drosselstelle 43 im Ventilkörper 9 und der weiteren Drosselstelle 49 zwischen dem Ringraum 33 und dem Kanal 31 bestimmt. Die Federkraft der Ventilfeder 11 und die Magnetkraft auf den Anker 23 sind im Vergleich zur Fig. 1 unverändert geblieben. Auf den Ventilkörper 9 wirkt in Öffnungsrichtung der Druck pö innerhalb der Durchgangsöffnung 25 auf die in Abhubrichtung wirksame druckbeaufschlagte Fläche (A_{ÖD}). In Schließrichtung treten die Druckkräfte auf in Schließrichtung wirksamen druckbeaufschlagten Fläche (A_{SchließD}) mit dem Druck pö und auf die zusätzlich in Schließrichtung wirksame druckbeaufschlagte Fläche (A_{SchließD2}) mit einem verminderten Druck p_{SchließD} auf. Im Vergleich zum Stand der Technik ist bei vollwirksamer Schließkraft der Ventilfeder 11 ein durch den Anteil zusätzlich in Schließrichtung wirksame druckbeaufschlagte Fläche (A_{SchließD2}) multipliziert mit dem verminderten Druck p_{Schließ} beschreibbarer erhöhter Öffnungsdruck pö notwendig, um den Ventilkörper 9 von der Ventilsitzfläche 7 abheben zu lassen. Die erreichte Druckerhöhung ist proportional einer erhöhten Dämpfkraft. Bei einer im Vergleich zum Stand der Technik unveränderten Auslegung der Ventilfeder 11 und der Magnetspule 21 wird mit einer identischen Stellkraft eine deutliche größere Bandbreite der möglichen Dämpfkraftkennlinien erreicht, also die so genannte Spreizung der Dämpfkraftkennlinien erhöht.

Bei einer Anströmung des Ventilkörpers 9 über die radialen Öffnungen 29 im Gehäuse 3 ändert sich an der Dämpfkraftcharakteristik des verstellbaren Dämpfventils im Vergleich zum beschriebenen Stand der Technik nichts, da dass Rückschlagventil 45 im Ventilkörper 9 die Kanalverbindung 41 verschließt, also die identischen druckbeaufschlagten Flächen in Öffnungs- und Schließrichtung wirksam sind. Der Dämpfventilaufbau ist trotz der zusätzlich in Schließrichtung wirksamen druckbeaufschlagten Fläche (A_{SchließD2}) bei einer Anströmung über die Durchgangsöffnung 25 so einfach, weil die zusätzlich in Schließrichtung wirksame druckbeaufschlagte Fläche (A_{SchließD2}) sowohl bei einer Anströmung über die Durchgangsöffnung innerhalb des Ventilsitzringes 7 wie auch bei einer Anströmung über die radialen Kanäle 31 wirksam ist und keine unabhängige Fläche als zusätzliche in Schließrichtung wirksame druckbeaufschlagte Fläche (A_{SchließD2}) geschaffen werden musste.

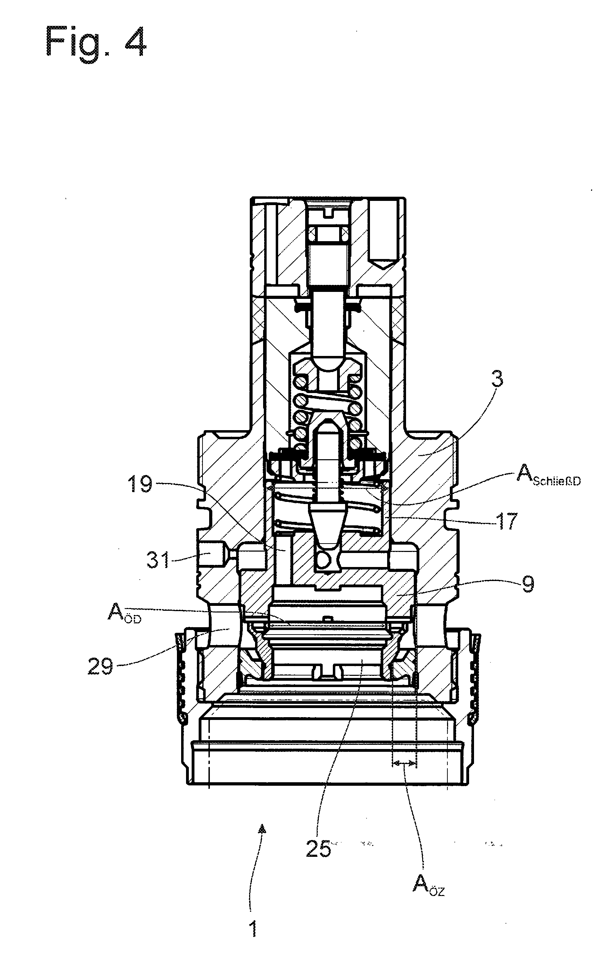

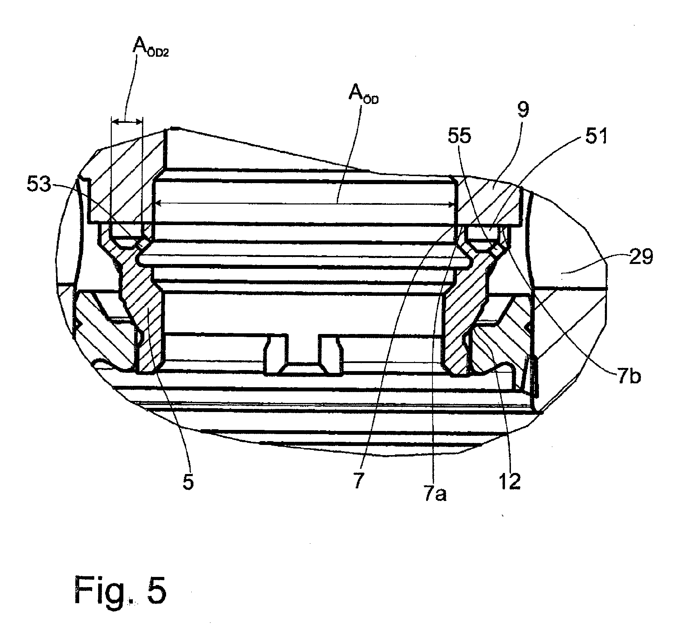

Die Figuren 4 und 5 beschreiben ein Dämpfventil 1, ebenfalls aufbauend auf dem Prinzip nach Fig. 1, das eine bei einer Anströmung über die Durchgangsöffnung 25 erste in Abhubrichtung wirksame druckbeaufschlagte Fläche A_{ÖD1} aufweist, deren Größe vom Innendurchmesser der Kontaktfläche zwischen dem Ventilkörper 9 und der Ventilsitzfläche 7 bestimmt wird. Diese erste druckbeaufschlagte Fläche A_{ÖD1} ist kleiner ausgeführt als die in Schließrichtung wirksame druckbeaufschlagte Fläche (A_{SchließD}) mit einem Querschnitt entsprechend dem Durchmesser der Führungshülse 17 des Ventilkörpers 9. Auf den Ventilkörper 9 wirkt eine Druckkraft in Abhubrichtung über eine zusätzliche druckbeaufschlagte Fläche (A_{ÖD2}) in Verbindung mit einem zur ersten druckbeaufschlagten Fläche (A_{ÖD}) verminderten Druckniveau. Die zusätzliche in Abhubrichtung wirksame druckbeaufschlagte Fläche A_{ÖD2} ist zwischen einer inneren und einer äußeren Ventilsitzfläche 7a; 7b in der Form einer Ringnut 51 ausgeführt, wobei alternativ beliebige andere Formen, wie Sacklochbohrungen oder Taschen denkbar sind. Eine Zuflussdrossel 53 zwischen der versorgenden Durchlassöffnung 25 und der zusätzlichen druckbeaufschlagten Fläche (A_{ÖD2}) sorgt für eine Druckminderung. Eine Abflussdrossel 55 in Richtung der radialen Öffnungen 29 im Gehäuse 3 stellt eine weitere Möglichkeit zur Druckbestimmung an der zusätzlich in Abhubrichtung wirksamen druckbeaufschlagten Fläche (A_{ÖD2}) dar. Zur gleichmäßigen Druckverteilung an der zusätzlichen in Abhubrichtung wirksamen druckbeaufschlagten Fläche A_{ÖD2} sind die Zuflussdrossel 53 und die Abiaufdrossel 55 in Umfangsrichtung versetzt angeordnet, so dass das Dämpfmedium die Ringnut 51 vollständig passieren muss.

Bei einer Anströmung des Ventilkörpers mit Dämpfmedium über die Durchlassöffnung 25 steht das Dämpfmedium mit dem Öffnungsdruck pö an der Unterseite des Ventilkörpers 9 an und beaufschlagt dabei die in Abhubrichtung wirksamen druckbeaufschlagten Fläche (A_{ÖD}). Über die Verbindungsöffnung 19 steht das Dämpfmedium mit dem Druck pö auch an der Rückseite mit der in Schließrichtung wirksamen druckbeaufschlagten Fläche (A_{SchließD}) des Ventilkörpers 9 an. Parallel dazu strömt Dämpfmedium über die Zuflussdrossel 53 in die Ringnut 51 zwischen den beiden Ventilsitzflächen 7a; 7b ein, wobei ein verminderter Druck pö₁ wirksam ist. Der zum Abhub des Ventilkörpers 9 notwendige Druck pö ist größer als bei der Bauform gemäß dem Stand der Technik, so dass auch die Spreizung der Dämpfkraftkennlinien vergrößert wurde.

Die zusätzlich in Abhubrichtung wirksame druckbeaufschlagte Fläche (A_{ÖD2}) wirkt sich auch auf eine Anströmung über die Öffnungen 29 aus, jedoch lässt sich dieser Effekt z. B. durch die Vergrößerung des Ventilsitzdurchmessers an der Ventilsitzfläche 12 kompensieren, um die in Öffnungsrichtung wirksame ringförmige druckbeaufschlagte Fläche A_{ÖZ} zu verkleinern (Fig. 4).

## Patentansprüche

1. Verstellbares Dämpfventil (1) für einen Schwingungsdämpfer, umfassend ein Gehäuse (3) mit einer Stufenöffnung (13), in dem ein Ventilkörper (9) über eine Führungshülse (17) und einem radial nach außen gerichteten Absatz (15) axial beweglich geführt ist, wobei der Ventilkörper (9) über zwei Richtungen angeströmt wird und für eine ersten Anströmungsrichtung in Richtung einer Ventilsitzfläche (7) innerhalb einer Kontaktfläche zwischen dem Ventilkörper (9) und der Ventilsitzfläche (7) eine in Abhubrichtung des Ventilkörpers (9) wirksame druckbeaufschlagte Fläche (A_{ÖD}) aufweist, die von einer Durchgangsöffnung (25) innerhalb eines von Ventilsitzfläche (7) begrenzten Querschnitts mit Dämpfmedium angeströmt wird, und von einer Rückseite des Ventilkörpers (9) eine mit dem Durchmesser der Führungshülse (17) wirksame in Schließrichtung druckbeaufschlagte Fläche (A_{SchließD}) gebildet wird, wobei auf den Ventilkörper (9) eine resultierende Kraft umfassend eine Kraft mindestens einer Ventilfeder (11) und eine Stellkraft eines Aktuators (21; 23) wirkt, und der Ventilkörper (9) für eine zweite Anströmrichtung eine zweite in Öffnungsrichtung druckbeaufschlagte ringförmigen Fläche (A_{ÖZ}) aufweist, **dadurch gekennzeichnet,**
**dass** bei einer Anströmung in die zweite Anströmrichtung auf die in Öffnungsrichtung wirksame ringförmige druckbeaufschlagte Fläche (Aöz) des Ventilkörpers (9) eine in Schließrichtung druckbeaufschlagte ringförmige Fläche (A_{SchließZ}) wirkt und bei einer Anströmung des Ventilkörpers (9) in die erste Anströmrichtung über die Durchgangsöffnung (25) in Schließrichtung des Ventilkörpers (9) eine zusätzliche in Schließrichtung wirksame druckbeaufschlagte Fläche (A_{SchließD2}) des Ventilkörpers (9) mit Dämpfmedium druckbeaufschlagt wird, wobei die zuzätzliche in Schließrichtung wirksame druckbeaufschlagte Fläche (A_{SchließD2}) und die in Schließrichtung druckbeaufschlagte ringförmige Fläche (A_{SchließZ}) identisch sind.

2. Verstellbares Dämpfventil nach Anspruch 1,
**dadurch gekennzeichnet,**
**dass** die zusätzliche in Schließrichtung wirksame druckbeaufschlagte Fläche (A_{SchließD2}) über mindestens eine Kanalverbindung (41) mit der Durchgangsöffnung (25) verbunden ist.

3. Verstellbares Dämpfventil nach Anspruch 2,
**dadurch gekennzeichnet,**
**dass** die Kanalverbindung (41) im Ventilkörper (9) ausgeführt ist.

4. Verstellbares Dämpfventil nach Anspruch 2,
**dadurch gekennzeichnet,**
**dass** innerhalb der Kanalverbindung (41) eine Drosselstelle (43) ausgeführt ist.

5. Verstellbares Dämpfventil nach Anspruch 1,
**dadurch gekennzeichnet,**
**dass** die zusätzliche in Schließrichtung wirksame druckbeaufschlagte Fläche (A_{SchließD2}) von dem radial nach außen weisenden Absatz (15) des Ventilkörpers (9) gebildet wird.

6. Verstellbares Dämpfventil nach Anspruch 5,
**dadurch gekennzeichnet,**
**dass** der Absatz (15) des Ventilkörpers (9) und die Stufenöffnung (13) einen Ringraum (33) bilden, dessen Abfluss mit einer weiteren Drosselstelle (49) bestückt ist.

7. Verstellbares Dämpfventil nach Anspruch 2,
**dadurch gekennzeichnet,**
**dass** die Kanalverbindung (41) ein in Strömungsrichtung der Öffnung schließendes Rückschlagventil (45) aufweist.

8. Verstellbares Dämpfventil nach Anspruch 7,
**dadurch gekennzeichnet,**
**dass** der Ventilkörpers (9) zwei geschichtete Bauteile (9a; 9b) umfasst, zwischen denen eine Rückschlagventilscheibe (47) axial beweglich angeordnet ist.

9. Verstellbares Dämpfventil (1) für einen Schwingungsdämpfer, umfassend ein Gehäuse (3) mit einer Stufenöffnung (13), in dem ein Ventilkörper (9) über eine Führungshülse (17) und einem radial nach außen gerichteten Absatz (15) axial beweglich geführt ist, wobei der Ventilkörper (9) in Richtung einer Ventilsitzfläche (7) innerhalb einer Kontaktfläche zwischen dem Ventilkörper (9) und der Ventilsitzfläche (7) eine in Abhubrichtung des Ventilkörpers (9) wirksame druckbeaufschlagte Fläche (A_{ÖD}) aufweist, die von einer Durchgangsöffnung (25) innerhalb eines von Ventilsitzfläche (7) begrenzten Querschnitts mit Dämpfmedium angeströmt wird, und von einer Rückseite des Ventilkörpers (9) eine mit dem Durchmesser der Führungshülse (17) in Schließrichtung wirksame druckbeaufschlagte Fläche (A_{SchließD}) gebildet wird, wobei auf den Ventilkörper (9) eine resultierende Kraft umfassend eine Kraft mindestens einer Ventilfeder (11) und eine Stellkraft eines Aktuators (21; 23) wirkt,
**dadurch gekennzeichnet,**
**dass** der Ventilkörper (9) eine erste in Abhubrichtung wirksame druckbeaufschlagte Fläche (A_{ÖD}) aufweist, die kleiner ist als die in Schließrichtung wirksame druckbeaufschlagte Fläche (A_{SchließD}) und mindestens eine zusätzliche in Abhubrichtung wirksame druckbeaufschlagte Fläche (A_{ÖD2}) mit einem im Vergleich zur ersten in Abhubrichtung wirksamen druckbeaufschlagten Fläche (A_{ÖD}) vermindertem Druckniveau beaufschlagt wird.

10. Verstellbares Dämpfventil nach Anspruch 9,
**dadurch gekennzeichnet,**
**dass** die zusätzlich in Abhubrichtung wirksame druckbeaufschlagte Fläche (A_{ÖD2}) über eine Zuflussdrossel (53) mit der die in Abhubrichtung wirksame druckbeaufschlagte Fläche (A_{ÖD}) mit Dämpfmedium versorgende Durchgangsöffnung (25) verbunden ist.

11. Verstellbares Dämpfventil nach Anspruch 9,
**dadurch gekennzeichnet,**
**dass** die mindestens eine zusätzlich in Abhubrichtung wirksame druckbeaufschlagte Fläche (A_{ÖD2}) zwischen einer inneren und einer äußeren Ventilsitzfläche (7a; 7b) ausgeführt ist.

12. Verstellbares Dämpfventil nach Anspruch 11,
**dadurch gekennzeichnet,**
**dass** die zusätzlich in Abhubrichtung wirksame druckbeaufschlagte Fläche (A_{ÖD2}) von mindestens einer Ringnut (51) gebildet wird.

13. Verstellbares Dämpfventil nach Anspruch 9,
**dadurch gekennzeichnet,**
**dass** eine Abflussdrossel (55) an die zusätzlich in Abhubrichtung wirksame druckbeaufschlagte Fläche (A_{ÖD2}) angeschlossen ist.

14. Verstellbares Dämpfventil nach den Ansprüchen 10 und 13,
**dadurch gekennzeichnet,**
**dass** die Zuflussdrossel (53) und die Abflussdrossel (55) in Umfangsrichtung versetzt ausgeführt sind.

## Claims

1. Adjustable damping valve (1) for a vibration damper, comprising a housing (3) with a stepped orifice (13), in which a valve body (9) is guided axially movably via a guide sleeve (17) and a radially outward-directed shoulder (15), the valve body (9) being subjected to onflow in two directions and having for a first onflow direction in the direction of a valve-seat surface (7), within a contact surface between the valve body (9) and the valve-seat surface (7), a pressure-loaded surface (A_{ÖD}) which is active in the lift-off direction of the valve body (9) and which is subjected to the onflow of damping medium from a through-orifice (25) within a cross section delimited by the valve-seat surface (7), and a rear side of the valve body (9) forming a surface (A_{SchließD}) active with the diameter of the guide sleeve (17) and pressure-loaded in the closing direction, a resultant force which comprises a force of at least one valve spring (11) and an actuating force of an actuator (21; 23) acting upon the valve body (9), and the valve body (9) having for a second onflow direction a second ring-shaped surface (A_{ÖZ}) pressure-loaded in the opening direction, **characterized in that**, in the case of onflow in the second onflow direction, a ring-shaped surface (A_{SchließZ}) pressure-loaded in the closing direction acts upon the ring-shaped pressure-loaded surface (A_{ÖZ}), active in the opening direction, of the valve body (9), and, when the valve body (9) is subjected to onflow in the first onflow direction, an additional pressure-loaded surface (A_{SchließD2}), active in the closing direction, of the valve body (9) is pressure-loaded with damping medium in the closing direction of the valve body (9) via the through-orifice (25), the additional pressure-loaded surface (A_{SchließD2}) active in the closing direction and the ring-shaped surface (A_{SchließZ}) pressure-loaded in the closing direction being identical.

2. Adjustable damping valve according to Claim 1, **characterized in that** the additional pressure-loaded surface (A_{SchließD2}) active in the closing direction is connected to the through-orifice (25) via at least one duct connection (41).

3. Adjustable damping valve according to Claim 2, **characterized in that** the duct connection (41) is formed in the valve body (9).

4. Adjustable damping valve according to Claim 2, **characterized in that** a throttle point (43) is formed inside the duct connection (41).

5. Adjustable damping valve according to Claim 1, **characterized in that** the additional pressure-loaded surface (A_{SchließD2}) active in the closing direction is formed by the radially outward-pointing shoulder (15) of the valve body (9).

6. Adjustable damping valve according to Claim 5, **characterized in that** the shoulder (15) of the valve body (9) and the stepped orifice (13) form an annular space (33), the outflow of which is fitted with a further throttle point (49).

7. Adjustable damping valve according to Claim 2, **characterized in that** the duct connection (41) has a non-return valve (45) that closes in the flow direction of the orifice.

8. Adjustable damping valve according to Claim 7, **characterized in that** the valve body (9) comprises two layered components (9a; 9b) between which a non-return valve disc (47) is arranged axially movably.

9. Adjustable damping valve (1) for a vibration damper, comprising a housing (3) with a stepped orifice (13), in which a valve body (9) is guided axially movably via a guide sleeve (17) and a radially outward-directed shoulder (15), the valve body (9) having in the direction of a valve-seat surface (7), within a contact surface between the valve body (9) and the valve-seat surface (7), a pressure-loaded surface (A_{ÖD}) which is active in the lift-off direction of the valve body (9) and which is subjected to the onflow of damping medium from a through-orifice (25) within a cross section delimited by the valve-seat surface (7), and a rear side of the valve body (9) forming a pressure-loaded surface (A_{SchließD}) active with the diameter of the guide sleeve (17) in the closing direction, a resultant force which comprises a force of at least one valve spring (11) and an actuating force of an actuator (21; 23) acting upon the valve body (9), **characterized in that** the valve body (9) has a first pressure-loaded surface (A_{ÖD}) which is active in the lift-off direction and which is smaller than the pressure-loaded surface (A_{SchließD}) active in the closing direction, and at least one additional pressure-loaded surface (A_{ÖD2}) active in the lift-off direction is acted upon by a pressure level which is reduced in comparison with the first pressure-loaded surface (A_{ÖD}) active in the lift-off direction.

10. Adjustable damping valve according to Claim 9, **characterized in that** the pressure-loaded surface (A_{ÖD2}) additionally active in the lift-off direction is connected via an inflow throttle (53) to the through-orifice (25) supplying damping medium to the pressure-loaded surface (A_{ÖD}) active in the lift-off direction.

11. Adjustable damping valve according to Claim 9, **characterized in that** the at least one pressure-loaded surface (A_{ÖD2}) additionally active in the lift-off direction is formed between an inner and an outer valve-seat surface (7a; 7b).

12. Adjustable damping valve according to Claim 11, **characterized in that** the pressure-loaded surface (A_{ÖD2}) additionally active in the lift-off direction is formed by at least one annular groove (51).

13. Adjustable damping valve according to Claim 9, **characterized in that** an outflow throttle (55) is connected to the pressure-loaded surface (A_{ÖD2}) additionally active in the lift-off direction.

14. Adjustable damping valve according to Claims 10 and 13, **characterized in that** the inflow throttle (53) and the outflow throttle (55) are formed so as to be offset in the circumferential direction.

## Revendications

1. Soupape d'amortissement réglable (1) pour un amortisseur d'oscillations, comportant un boîtier (3) pourvu d'une ouverture étagée (13), dans lequel boîtier est guidé de manière axialement mobile un corps de soupape (9) par le biais d'une douille de guidage (17) et d'un épaulement (15) orienté radialement vers l'extérieur, le corps de soupape (9) recevant un écoulement dans deux sens et comprenant, pour un premier sens d'écoulement en direction d'une surface de siège de soupape (7), à l'intérieur d'une surface de contact entre le corps de soupape (9) et la surface de siège de soupape (7), une surface (A_{ÖD}) sollicitée en pression et active dans le sens de soulèvement du corps de soupape (9), laquelle surface reçoit l'écoulement d'un fluide amortisseur par une ouverture de passage (25) à l'intérieur d'une section transversale délimitée par la surface de siège de soupape (7), et une surface (A_{schließD}) sollicitée en pression dans le sens de fermeture et coopérant avec le diamètre de la douille de guidage (17) étant formée par un côté arrière du corps de soupape (9), une force résultante comprenant une force d'au moins un ressort de soupape (11) et une force de réglage d'un actionneur (21 ; 23) agissant sur le corps de soupape (9), et le corps de soupape (9) comprenant, pour un deuxième sens d'écoulement, une deuxième surface annulaire (A_{ÖZ}) sollicitée en pression dans le sens d'ouverture, **caractérisée en ce**
**qu'**en cas d'écoulement dans le deuxième sens d'écoulement, une surface annulaire (A_{SchließZ}) sollicitée en pression dans le sens de fermeture agit sur la surface annulaire (A_{ÖZ}), sollicitée en pression et active dans le sens d'ouverture, du corps de soupape (9), et lorsque le corps de soupape (9) reçoit un écoulement dans le premier sens d'écoulement par l'ouverture de passage (25), une surface supplémentaire (A_{SchließD2}), sollicitée en pression et active dans le sens de fermeture, du corps de soupape (9) est sollicitée en pression par un fluide amortisseur dans le sens de fermeture du corps de soupape (9), la surface supplémentaire (A_{SchließD2}) sollicitée en pression et active dans le sens de fermeture et la surface annulaire (A_{SchließZ}) sollicitée en pression dans le sens de fermeture étant identiques.

2. Soupape d'amortissement réglable selon la revendication 1,
**caractérisée en ce que**
la surface supplémentaire (A_{SchließD2}) sollicitée en pression et active dans le sens de fermeture est raccordée à l'ouverture de passage (25) par le biais d'au moins un canal de raccordement (41).

3. Soupape d'amortissement réglable selon la revendication 2,
**caractérisée en ce que**
le canal de raccordement (41) est réalisé dans le corps de soupape (9).

4. Soupape d'amortissement réglable selon la revendication 2,
**caractérisée en ce**
**qu'**un point d'étranglement (43) est réalisé à l'intérieur du canal de raccordement (41).

5. Soupape d'amortissement réglable selon la revendication 1,
**caractérisée en ce que**
la surface supplémentaire (A_{SchließD2}) sollicitée en pression et active dans le sens de fermeture est formée par l'épaulement (15), tourné radialement vers l'extérieur, du corps de soupape (9).

6. Soupape d'amortissement réglable selon la revendication 5,
**caractérisée en ce que**
l'épaulement (15) du corps de soupape (9) et l'ouverture étagée (13) forment un espace annulaire (33) dont la sortie est pourvue d'un point d'étranglement supplémentaire (49).

7. Soupape d'amortissement réglable selon la revendication 2,
**caractérisée en ce que**
le canal de raccordement (41) comprend une soupape de non-retour (45) se fermant dans le sens d'écoulement de l'ouverture.

8. Soupape d'amortissement réglable selon la revendication 7,
**caractérisée en ce que**
le corps de soupape (9) comporte deux composants superposés (9a ; 9b) entre lesquels un disque de soupape de non-retour (47) est disposé de manière axialement mobile.

9. Soupape d'amortissement réglable (1) pour un amortisseur d'oscillations, comportant un boîtier (3) pourvu d'une ouverture étagée (13), dans lequel boîtier est guidé de manière axialement mobile un corps de soupape (9) par le biais d'une douille de guidage (17) et d'un épaulement (15) orienté radialement vers l'extérieur, le corps de soupape (9) comprenant, en direction d'une surface de siège de soupape (7), à l'intérieur d'une surface de contact entre le corps de soupape (9) et la surface de siège de soupape (7), une surface (A_{ÖD}) sollicitée en pression et active dans le sens de soulèvement du corps de soupape (9), laquelle surface reçoit l'écoulement d'un fluide amortisseur par une ouverture de passage (25) à l'intérieur d'une section transversale délimitée par la surface de siège de soupape (7), et une surface (A_{SchließD}) sollicitée en pression et coopérant avec le diamètre de la douille de guidage (17) dans le sens de fermeture étant formée par un côté arrière du corps de soupape (9), une force résultante comprenant une force d'au moins un ressort de soupape (11) et une force de réglage d'un actionneur (21 ; 23) agissant sur le corps de soupape (9),
**caractérisée en ce que**
le corps de soupape (9) comprend une première surface (A_{ÖD}) sollicitée en pression et active dans le sens de soulèvement, laquelle surface est plus petite que la surface (A_{SchließD}) sollicitée en pression et active dans le sens de fermeture, et au moins une surface supplémentaire (A_{ÖD2}) sollicitée en pression et active dans le sens de soulèvement est sollicitée avec un niveau de pression réduit par comparaison avec la première surface (A_{ÖD}) sollicitée en pression et active dans le sens de soulèvement.

10. Soupape d'amortissement réglable selon la revendication 9,
**caractérisée en ce que**
la surface supplémentaire (A_{ÖD2}) sollicitée en pression et active dans le sens de soulèvement est raccordée par le biais d'un étranglement d'entrée (53) à l'ouverture de passage (25) alimentant en fluide amortisseur la surface (A_{ÖD}) sollicitée en pression et active dans le sens de soulèvement.

11. Soupape d'amortissement réglable selon la revendication 9,
**caractérisée en ce que**
l'au moins une surface supplémentaire (A_{ÖD2}) sollicitée en pression et active dans le sens de soulèvement est réalisée entre une surface de siège de soupape intérieure et une surface de siège de soupape extérieure (7a ; 7b).

12. Soupape d'amortissement réglable selon la revendication 11,
**caractérisée en ce que**
la surface supplémentaire (A_{ÖD2}) sollicitée en pression et active dans le sens de soulèvement est formée par au moins une rainure annulaire (51).

13. Soupape d'amortissement réglable selon la revendication 9,
**caractérisée en ce**
**qu'**un étranglement de sortie (55) est raccordé à la surface supplémentaire (A_{ÖD2}) sollicitée en pression et active dans le sens de soulèvement.

14. Soupape d'amortissement réglable selon les revendications 10 et 13,
**caractérisée en ce que**
l'étranglement d'entrée (53) et l'étranglement de sortie (55) sont réalisés de manière décalée dans la direction périphérique.
